# EUROPÄISCHE PATENTSCHRIFT

(11) **EP 2 345 835 B1**
(45) Veröffentlichungstag und Bekanntmachung des Hinweises auf die Patenterteilung: **02.03.2016**
(21) Anmeldenummer: 10194163.1
(22) Anmeldetag: 08.12.2010
(51) Int. Cl.: F16P 3/08, E05B 65/00, B67C 3/24

(54) **Verriegelungsvorrichtung und Sicherungseinrichtung für einen Arbeitsbereich einer Maschine**
Locking device and safety device for a work area of a machine
Dispositif de verrouillage et dispositif de sécurisation pour un domaine de travail d'une machine

(30) Priorität: 13.01.2010 DE 202010000032 U
(43) Veröffentlichungstag der Anmeldung: 20.07.2011
(73) Patentinhaber: Krones AG, 93073 Neutraubling (DE)
(72) Erfinder: Krieger, Robert, 93073 Neutraubling (DE); Hof, Reimund, 93073 Neutraubling (DE)
(74) Vertreter: Benninger, Johannes

(56) Entgegenhaltungen:
- GB-A- 2 183 283
- US-A- 2 268 741
- US-A- 4 093 066
- US-A1- 2005 028 947
- US-B1- 7 344 209

## Beschreibung

Die Erfindung betrifft eine Verriegelungsvorrichtung für in oder an einem Rahmen oder einem Gehäuse schwenkbare Klappen oder Türen. Die Erfindung betrifft insbesondere eine zur Absicherung gegen Kollisionen von Objekten und/oder Personen mit sich bewegenden oder drehenden Maschinenteilen dienende Tür- oder Klappenverriegelung, die durch manuelle Betätigung entriegelt werden kann. Die Erfindung betrifft zudem eine Sicherungseinrichtung für einen Arbeitsbereich einer Maschine mit beweglichen und/oder rotierenden Teilen.

Maschinen und Anlagen zur Handhabung von Objekten und Artikeln sowie zur Verarbeitung von Produkten bestehen meist aus zahlreichen Komponenten, Modulen und Anlagenteilen, die in regel- oder unregelmäßigen Abständen gewartet und/oder justiert werden müssen. Bei solchen manuellen Eingriffen kann das Risiko einer Kollision mit sich drehenden oder bewegenden Anlagen- oder Maschinenteilen entstehen. So umfassen einzelne Anlagenteile üblicherweise eine für den entsprechenden Produktionsablauf vorgesehene Maschine, die von einer Einhausung umgeben ist, welche einen Schutz vor Eingriff durch Personal in den Maschinenbereich gewährleisten soll. Die Einhausung kann auch derart ausgelegt sein, dass die Maschine zusätzlich vor äußeren Einflüssen wie Feuchtigkeit, Staub oder dergleichen geschützt wird. Dadurch können ggf. sterile Bedingungen innerhalb des betreffenden Anlagenteils sichergestellt werden.

Bei Flaschenbehandlungs- und -verarbeitungsanlagen sowie bspw. bei der Etikettiertechnik werden Personen meist durch trennende Schutzeinrichtungen vor Gefahrenquellen geschützt. Muss zu Wartungszwecken, zu Reinigungs- oder Instandhaltungsarbeiten oder zur Fehlersuche die Schutzeinrichtung beweglich oder abnehmbar sein, so ist die Schutzeinrichtung durch einen Sicherheitsschalter abzusichern. Je nach bestehendem Gefährdungspotential muss der Schalter eine sog. Zuhaltung und Verriegelung umfassen. Mit der Umsetzung aktuell gültiger Sicherheitsrichtlinien nach den europäisch gültigen Normen EN ISO 14121 und 13849 sind die Schutzschalter mit zwei Kreisen abzusichern.

Die DE 10 2007 047 733 A1 offenbart eine Flaschenbehandlungsanlage mit einer Sicherheitseinrichtung, die einen ersten zugänglichen Schutzbereich umfasst, der durch einen ersten Schutz begrenzt ist und in welchem eine erste Maschine mit wenigstens einem dem ersten Schutzbereich zugeordneten Antrieb vorgesehen ist. Die Sicherheitseinrichtung der Flaschenbehandlungsanlage umfasst weiterhin einen zweiten zugänglichen Schutzbereich, der durch einen an den ersten Schutz unmittelbar angrenzenden zweiten Schutz begrenzt ist und in welchem eine zweite Maschine mit wenigstens einem dem zweiten Schutzbereich zugeordneten weiteren Antrieb vorgesehen ist. Ein Flaschentransport von der ersten zu der zweiten Maschine wird über eine schutzbereichsüberschreitende, über einen eigenen Antrieb verfügende Transporteinrichtung durchgeführt. Die Sicherheitseinrichtung weist weiterhin eine Abschaltvorrichtung auf, welche bei Zugang zu irgendeinem der Schutzbereiche den wenigstens einen, dem jeweiligen Schutzbereich zugeordneten Maschinenantrieb und den Antrieb der Transporteinrichtung abschaltet.

Die DE 20 2004 020 863 U1 offenbart weiterhin eine Vorrichtung zur Sicherung eines durch eine Maschine zumindest teilweise gefährdeten Arbeitsbereichs, welcher einen gefährdeten Unterbereich und einen weniger oder nicht gefährdeten weiteren Unterbereich aufweist. Es sind zwei Sicherungssysteme vorgesehen, wobei eines der Sicherungssysteme einer hohen Sicherheitskategorie zugeordnet ist und bspw. durch einen Lichtvorhang oder eine Lichtschrankenanordnung gebildet sein kann. Das zweite Sicherungssystem ist einer niedrigeren Sicherheitskategorie zugeordnet und kann bspw. durch einen Laserscanner oder einen Infrarotsensor gebildet sein. Mittels einer Signalauslösestufe wird ein Signal für den Fall generiert, dass mittels des ersten Sicherungssystems mit der hohen Sicherheitskategorie ein Eindringen eines Objekts in den gefährdeten Arbeitsbereich feststellt wurde, wobei gleichzeitig mittels des zweiten Sicherungssystems mit der niedrigeren Sicherheitskategorie sichergestellt wird, dass sich kein Objekt im weniger oder nicht gefährdeten weiteren Unterbereich befindet. Als Maschine wird beispielhaft ein Roboter genannt, der sich innerhalb des gefährdeten und sich mit den Roboterbewegungen verändernden Unterbereichs befindet.

Durch US 2,268,741 ist eine verbesserte Verriegelungsvorrichtung für eine nach vorne öffnende Motorhaube eines Kraftfahrzeugs bekannt. Bei den gängigen Verriegelungsvorrichtungen für nach vorne öffnende Motorhauben springt nach Betätigung eines im Fahrzeuginnenraum untergebrachten Hebels die Motorhaube einen Spalt weit auf und wird durch die Verriegelungsvorrichtung zunächst zurückgehalten. Durch den Spalt kann der Benutzer hindurchgreifen und eine zweite Betätigung der Verriegelungsvorrichtung per Hand oder mittels eines gesonderten Werkzeugs vornehmen. Erst dadurch wird die Motorhaube freigegeben und kann vollständig aufschwingen. Die verbesserte Verriegelungsvorrichtung sieht vor, die in Schließstellung befindliche Motorhaube zunächst durch Betätigung eines im Fahrzeuginnenraum untergebrachten Hebels ebenfalls einen Spalt weit zu öffnen, wobei die Motorhaube durch die Verriegelungsvorrichtung zunächst in dieser einen Spalt weit geöffneten Zwischenstellung zurückgehalten wird. Anschließend wird die Verriegelungsvorrichtung durch Niederdrücken der Motorhaube aus der Zwischenstellung in Richtung deren Schließstellung freigegeben oder wirkungslos gemacht, worauf die Motorhaube ganz aufgeschwenkt werden kann. Die verbesserte Verriegelungsvorrichtung umfasst hierzu einen mittig um einen Bolzen schwenkbar gelagerten Schnappriegel mit einem Fangarm für die Motorhaube an seinem einen Ende und einem Stift an seinem anderen Ende. Eine am Stift um diesen schwenkbar gelagerte Klinke ist mit einem Zahn versehen, der zur Verriegelung der Motorhaube in deren Schließstellung mit einem Zahn eines mit Zähnen versehenen Abschnitt federbelastet in Eingriff steht. Wird die Klinke zum Öffnen der Motorhaube durch Ziehen des im Fahrzeuginnenraum angeordneten Hebels einmalig betätigt, kommt der Zahn aus dem Eingriff mit den Zähnen des gezahnten Abschnitts frei und betätigt via den Stift den Fangarm.

Gemeinsam ist den bekannten Sicherungssystemen der relative Aufwand für die optische oder anderweitige Sensoren benötigenden Überwachungseinrichtungen sowie die für eine effektive Schutzwirkung unverzichtbare sehr schnelle Reaktionszeit zwischen ungewolltem Eindringen in einen Sicherheitsbereich und vollständiger Stillstand aller sich bewegenden und einen eindringenden Benutzer unter Umständen gefährdenden Maschinenteile. Einfachere Systeme, die teilweise nur einen Schutzschalter vorsehen, erfüllen die derzeit gültigen Sicherheitsnormen nicht mehr, so dass in vielen Fällen eine Nachrüstung mit einem zweiten Schutzschalter oder zumindest mit einem zweiten Schutzkreis zur Überwachung unumgänglich ist. Bei einer herkömmlichen Sicherungsanordnung mit nur einem Schalter ist dagegen eine mechanische Verriegelung mit einer Zuhaltung unumgänglich.

Das vorrangige Ziel der Erfindung besteht darin, das manuelle Eingreifen oder Eindringen von Objekten in potenziell gefährliche Maschinenareale zumindest solange auf effektive Weise zu unterbinden, bis sich bewegende oder drehende Maschinen- oder Anlagenteile zu einem Stillstand gekommen sind. Eine Schutzeinrichtung, die dieses Ziel erfüllt, soll möglichst einfach aufgebaut sein und sich mit möglichst geringem konstruktivem und baulichem Aufwand in bestehende Anlagen oder Maschinen integrieren bzw. sich dort nachrüsten lassen.

Das Ziel der Erfindung wird mit dem Gegenstand des unabhängigen Anspruchs erreicht. Merkmale vorteilhafter Weiterbildungen der Erfindung ergeben sich aus den abhängigen Ansprüchen. Zur Erreichung des Ziels sieht die Erfindung eine Sicherungseinrichtung für einen zumindest teilweise gegen Eindringen eines Objekts und/oder gegen einen Eingriff zu schützenden Arbeitsbereich einer Maschine vor, die wenigstens eine schwenkbare Klappe oder Tür sowie eine damit gekoppelte Verriegelungsvorrichtung für in oder an einem Rahmen oder einem Gehäuse schwenkbare Klappen oder Türen aufweist, wobei die schwenkbare Klappe oder Tür mit einer Schalteinrichtung gekoppelt ist, die beim Öffnen der Klappe oder Tür einen Abschaltvorgang gefährdender beweglicher Teile und/oder Antriebe der Maschine auslöst.

Die Erfindung umfasst insbesondere eine zur Absicherung gegen Kollisionen von Objekten und/oder Personen mit sich bewegenden oder drehenden Maschinenteilen dienende Tür- oder Klappenverriegelung, die durch manuelle Betätigung entriegelt werden kann. Die Verriegelungsvorrichtung umfasst einen an der schwenkbaren Klappe oder Tür angeordneten, mittels eines manuell betätigbaren Hebels, Handgriffs oder Knebels beweglichen Riegels, der mit einer an einem Rahmen angeordneten Aufnahmeöffnung für den Riegel zusammenwirkt. Der Riegel weist entlang seiner Längserstreckungsrichtung, die annähernd einer Bewegungsrichtung des Riegels beim Öffnen oder Schließen der schwenkbaren Klappe oder Tür entspricht, mehrere Eingriffselemente zur Zusammenwirkung mit einem gehäuse- oder rahmenfesten Aufnahmeelement auf. Die zusammenwirkenden Eingriffs- und Aufnahmeelemente erzwingen zumindest beim Öffnen der Klappe oder Tür eine mehrfache Betätigung des Hebels, Handgriffs oder Knebels in wenigstens zwei entgegen gesetzte Bewegungs-, Schwenk- oder Drehrichtungen, wodurch jede Öffnungsbewegung zeitlich verzögert und damit drehenden und/oder sich bewegenden Maschinenteilen ausreichend Zeit gegeben wird, zu einem zuvor durch eine andere Sicherheitseinrichtung bereits eingeleiteten oder ausgelösten Stillstand zu kommen.

Diese Sicherungseinrichtung kann wahlweise mit wenigstens einer weiteren Sicherheitseinrichtung wie einer optischen Überwachungseinrichtung, einer Lichtschrankenüberwachung, einer Ultraschallüberwachungseinrichtung, einer induktiven Überwachungseinrichtung o. dgl. für den zu schützenden Arbeitsbereich gekoppelt sein. Diese Schalteinrichtung kann in einer einfachen Variante der Sicherungseinrichtung bspw. ein einfacher Druckschalter oder -taster o. dgl. sein, der an geeigneter Stelle eingebaut ist, so dass sein Druckknopf durch die Innenfläche der geschlossenen Tür oder Klappe gedrückt ist, solange die Tür geschlossen ist. Beim Öffnen der Tür wird der Druckknopf gelöst, so dass der Abschaltvorgang der beweglichen Maschinenteile eingeleitet werden kann. Das schnelle Öffnen der Tür während des Auslaufens der beweglichen oder sich drehenden Maschinenteile wird durch die mechanisch wirkende Verriegelungsvorrichtung zuverlässig verhindert, so dass durch die mehrstufigen Handhabungsschritte beim Öffnen der Verriegelungseinrichtung die notwendige Zeitdauer von typischerweise ca. zwei Sekunden zur Verfügung gestellt wird, um alle Gefährdungen beim Eingreifen in den geschützten Maschinenbereich auszuschließen.

Die Verriegelungsvorrichtung kann in einer ersten Ausführungsvariante vorsehen, dass der Riegel um seine Längsachse drehbar ist, einen zylindrischen Eingriffsbereich zur Zusammenwirkung mit dem Aufnahmeelement aufweist und mit einem Drehknebel zur manuellen Betätigung drehfest verbunden ist. Bei dieser Variante sind die Eingriffselemente durch am Eingriffsbereich des Riegels angeordnete Zapfen und/oder Nuten gebildet, die bei einer Öffnungs- oder Schließbewegung der Klappe oder Tür in Längserstreckungsrichtung des Riegels entlang des Aufnahmeelements gleiten und sich mit diesem in veränderlichem Verriegelungseingriff befinden. Der Drehknebel muss zum Öffnen der Klappe oder Tür und um diese aus ihrer geschlossenen Lage verschwenken zu können mehrfach in unterschiedliche Richtungen gedreht werden, wodurch der in einer Kulisse oder labyrinthartigen Führung bewegliche Riegel mit seinen Eingriffselementen, Zapfen und/oder Nuten in Längsrichtung aus dem Eingriffsbereich des korrespondierenden, rahmen- oder gehäusefesten Aufnahmeelements gebracht wird. Da diese mehrfachen Hin- und Herbewegungen nicht beliebig schnell von einem den Drehknebel manuell betätigenden Benutzer ausgeführt werden können, verbleibt normalerweise ausreichend Zeit (normalerweise ca. 1,5 sec.), um rotierende oder sich bewegende Teile einer Maschine zwischenzeitlich zum Stillstand kommen zu lassen, was sinnvoller Weise durch einen entsprechenden Kontakt, eine Überwachungseinrichtung o. dgl. ausgelöst wird, die für das Abschalten aller oder zumindest gefährdender Antriebe der Maschine sorgt. Während der Betätigungszeit für die erfindungsgemäße Verriegelungsvorrichtung bis zum tatsächlichen Öffnen der Tür oder Klappe können die Antriebe und sich bewegenden Teile auslaufen und zum Stillstand kommen, so dass die Verriegelungsvorrichtung ganz wesentlich zu einem Material schonenden, verzögerten Abschalten der Maschinenteile und -antriebe beiträgt und einen schlagartigen Stillstand mit den damit verbundenen Nachteilen für die Maschinenlebensdauer verzichtbar machen kann. Zum Herunterfahren einer Maschine bis zum Stillstand kann eine Zeit von ca. 1,5 sec. ausreichen. Dieser Zeitraum muss mit der mechanischen Verzögerung überbrückt werden können.

Um die Drehbewegungen für den Benutzer angenehmer zu machen, kann eine neutrale Mittellage und eine federunterstützte Rückbewegung aus den jeweiligen Auslenkungen in beide Richtungen vorgesehen sein. Wahlweise kann auch eine Ruhelage vorgesehen sein, die einem Endanschlag in eine der beiden Drehrichtungen entspricht. Auslenkungen bzw. Drehungen in die jeweils andere Endlage müssen bei dieser Variante sinnvoller Weise gegen die Rückstellkraft einer Federeinrichtung durchgeführt werden.

Eine alternative Ausführungsvariante der Verriegelungsvorrichtung sieht einen Riegel vor, der um eine zu einer Außenseite der Klappe oder Tür parallele Schwenkachse beweglich ist, einen innerhalb einer zur Schwenkachse senkrechten Schwenkebene befindlichen Eingriffsbereich zur Zusammenwirkung mit dem Aufnahmeelement aufweist und mit einem Betätigungshebel zur manuellen Schwenkbetätigung fest verbunden ist. Bei dieser Variante sind die Eingriffselemente durch am Eingriffsbereich des Riegels angeordnete Zacken, Vorsprünge und/oder Nuten gebildet, die bei einer Öffnungs- oder Schließbewegung der Klappe oder Tür innerhalb der Schwenkebene des Riegels entlang des Aufnahmeelements gleiten und sich mit diesem in veränderlichem Verriegelungseingriff befinden. Weiterhin ist es sinnvoll, wenn der Riegel mehrere ungefähr senkrecht zur Längsrichtung und parallel zur Bewegungs- oder Schwenkebene des Riegels orientierte Absätze aufweist, wobei weiterhin der mit der Aufnahmeöffnung zusammenwirkende Schaftabschnitt des Riegels eine Ausdehnung senkrecht zu seiner Längsrichtung aufweisen kann, die größer ist als eine Öffnungsbreite der Aufnahmeöffnung. Vorzugsweise weisen die wenigstens zwei Absätze zu entgegen gesetzten Richtungen, insbesondere jeweils annähernd senkrecht zur Längserstreckungsrichtung des Riegels.

Um die jeweiligen Schwenkbewegungen für den Benutzer praktikabler bzw. angenehmer zu machen, kann auch bei dieser Ausführungsvariante eine neutrale Mittellage und eine federunterstützte Rückbewegung aus den jeweiligen Auslenkungen in beide Richtungen, d.h. nach oben und unten, vorgesehen sein. Wahlweise kann auch eine Ruhelage vorgesehen sein, die einem Endanschlag in eine der beiden Schwenkrichtungen entspricht. Auslenkungen in die jeweils andere Endlage müssen bei dieser Variante sinnvoller Weise gegen die Rückstellkraft einer Federeinrichtung durchgeführt werden.

Die Verriegelungsvorrichtung kann insbesondere an einer Seite zwei voneinander beabstandete Absätze und an der gegenüber liegenden Seite einen Absatz aufweisen, der sich in Längserstreckungsrichtung des Riegels zwischen den beiden Absätzen der anderen Seite befindet. Auf diese Weise müssen mindestens drei aufeinander folgende Bewegungen durchgeführt werden, um die Absätze durch die Anschläge des Aufnahmeelements manövrieren zu können. Die Absätze können vorzugsweise als Widerhaken mit in Öffnungsrichtung der Klappe oder Tür senkrechten Anschlagflächen oder -kanten ausgebildet sein, so dass für das Überwinden der Widerstände zwingend ein gegensinniges mehrfaches Verschwenken des Riegels erforderlich ist. Wenn die Absätze an ihren den Anschlagflächen abgewandten Flanken dagegen angeschrägt sind, kann eine Rückdreh- oder Schwenkbewegung des Riegels beim Schließen der Klappe oder Tür selbsttätig und ohne manuelle Unterstützung durch Zusammenwirkung der Eingriffs- und Aufnahmeelemente erfolgen. Die abgeschrägten Flanken der Anschlagelemente gleiten hierbei beim Schließen der Tür unter gleichzeitiger Bewegung, Drehung oder Verschwenkung des Riegels und unter widerstandsarmer Überwindung der verschiedenen Anschlagelemente oder Absätze entlang des Aufnahmeelements bzw. dessen Öffnung, bis die Klappe oder Tür wieder geschlossen ist und der Riegel in seine entspannte Ruhelage bewegt ist.

Wie erwähnt, kann vorzugsweise gegen jede manuelle Betätigung des Hebels, Handgriffs oder Knebels aus einer neutralen Lage eine Rückstellkraft eines Rückstellmechanismus wirken. In diesem Zusammenhang kann es weiterhin von Vorteil sein, wenn die Rückdreh- oder Schwenkbewegungen des Riegels mit einer Dämpfungseinrichtung und/oder mechanischen Bremseinrichtung zusammenwirken. Eine solche Dämpfungs- und/oder Bremseinrichtung kann für eine zusätzliche Verzögerung der gegensinnigen Schwenk- oder Drehbewegungen des Riegels sorgen, so dass auch bei Betätigung durch einen besonders geschickten oder geübten Benutzer keine beliebige Beschleunigung der Öffnungsbewegung möglich ist, wodurch unter Umständen die gewünschte Verzögerungszeit bis zum Auslaufen der sich drehenden oder bewegenden Maschinenteile in unerwünschter Weise unterschritten werden könnte. Da es das vorrangige Ziel der Erfindung ist, das manuelle Eingreifen oder Eindringen von Objekten in potenziell gefährliche Maschinenareale nicht zu verhindern, sondern lediglich in geeigneter Weise zu verzögern, muss gewährleistet werden können, dass die Verriegelungseinrichtung zu ihrer vollständigen Betätigung eine Mindestbetätigungszeit nicht unterschreitet.

Schließlich betrifft die Erfindung eine Maschine zur Verarbeitung und/oder Handhabung von Objekten wie Getränkebehälter, Flaschen oder anderer Artikel. Die Maschine weist eine Sicherungseinrichtung für einen zumindest teilweise gegen Eindringen eines Objekts und/oder gegen einen Eingriff zu schützenden Arbeitsbereich der Maschine auf, die wenigstens eine schwenkbare Klappe oder Tür sowie eine damit gekoppelte Verriegelungsvorrichtung entsprechend einer der oben beschriebenen Ausführungsformen aufweist. Die schwenkbare Klappe oder Tür ist mit einer Schalteinrichtung gekoppelt, die beim Öffnen der Klappe oder Tür einen Abschaltvorgang gefährdender beweglicher Teile und/oder Antriebe der Maschine auslöst. Weiterhin kann die Maschine mit wenigstens einer weiteren Sicherheitseinrichtung wie einer optischen Überwachungseinrichtung, einer Lichtschrankenüberwachung, einer Ultraschallüberwachungseinrichtung, einer induktiven Überwachungseinrichtung o. dgl. für den zu schützenden Arbeitsbereich gekoppelt sein.

Die Erfindung liefert einen Mechanismus, der einen Zugriff von Personen und/oder Objekten in die Gefahrenzone einer Maschine zumindest so lange verzögert, bis gewährleistet ist, dass die Maschinen bis zum Zugriff durch Personen in ihren Arbeitsbereich abgeschaltet ist. Dies kann einen Zeitraum von ca. zwei Sekunden betreffen. Die Abschaltung der Maschine erfolgt dabei über einen herkömmlichen Sicherheitsschalter, der an der beweglich trennenden Schutzeinrichtung angeordnet ist. Die Kombination der mechanischen Zeitverzögerung mit dem herkömmlichen elektrischen Sicherheitsschalter ohne Verriegelung soll den ansonsten unverzichtbaren zweiten Absicherungskreis mit zusätzlicher Verriegelungseinrichtung ersetzen. Solche Absicherungen können bspw. bei Behälterbehandlungsvorrichtungen und -maschinen und deren Aggregaten eingesetzt werden, bspw. bei Etikettierstationen oder Kaltleimaggregaten oder dergleichen. Ein besonderer Vorteil der erfindungsgemäßen Sicherungsvorrichtung ist eine gegenüber aufwändigeren Sicherungsmaßnahmen deutliche Kosteneinsparung, da jede einzelne Klappe oder Tür auf die beschriebene Weise abgesichert werden kann. Da der Sicherheitsschalter mit Verriegelung stromlos geschlossen ist, wird eine Fluchtentriegelung des Schalters benötigt, da ansonsten das Aggregat im nicht elektrisch verbundenen Zustand nicht gereinigt oder gewartet werden könnte. Für die erfindungsgemäße mechanische Zeitverzögerung eignen sich verschiedene Varianten, so bspw. eine Variante, die mit labyrinthartigen Drehungen funktioniert. Die anhand des Ausführungsbeispiels verdeutlichte Variante mit dem hin- und herbeweglichen Schwenkhebel hat den Vorteil, dass der Schutz ohne zeitliche Verzögerung geschlossen werden kann.

Weitere Merkmale, Ziele und Vorteile der vorliegenden Erfindung gehen aus der nun folgenden detaillierten Beschreibung einer bevorzugten Ausführungsform der Erfindung hervor, die als nicht einschränkendes Beispiel dient und auf die beigefügte Zeichnung Bezug nimmt.

Fig. 1 zeigt eine schematische Perspektivdarstellung eines mit zwei schwenkbaren Türen versehenen und bei geöffneten Türen zugänglichen Arbeitsbereich einer Maschine.

Fig. 2 zeigt einen Teil einer Verriegelungsvorrichtung für die Türen in schematischer Perspektivdarstellung.

Fig. 3 zeigt eine Seitenansicht der Verriegelungsvorrichtung bei geschlossener Tür.

Fig. 4 zeigt eine schematische Perspektivdarstellung eines ersten Betätigungsschritts beim Öffnen der Tür und Entriegeln der Verriegelungsvorrichtung.

Fig. 5 zeigt eine schematische Perspektivdarstellung eines zweiten Betätigungsschritts beim Öffnen der Tür.

Fig. 6 zeigt einen dritten Schritt eines Öffnungsvorgangs für die Tür.

Fig. 7 zeigt die geöffnete und nicht mehr verriegelte Tür.

Für gleiche oder gleich wirkende Elemente der Erfindung werden identische Bezugszeichen verwendet. Ferner werden der Übersicht halber teilweise nur Bezugszeichen in den einzelnen Figuren dargestellt, die für die Beschreibung der jeweiligen Figur erforderlich sind. Die dargestellten Ausführungsformen stellen lediglich Beispiele dar. Darüber hinaus ist eine Vielzahl von Varianten und Abwandlungen denkbar, die von dem erfindungsgemäßen Gedanken Gebrauch machen und deshalb ebenfalls in den Schutzbereich fallen.

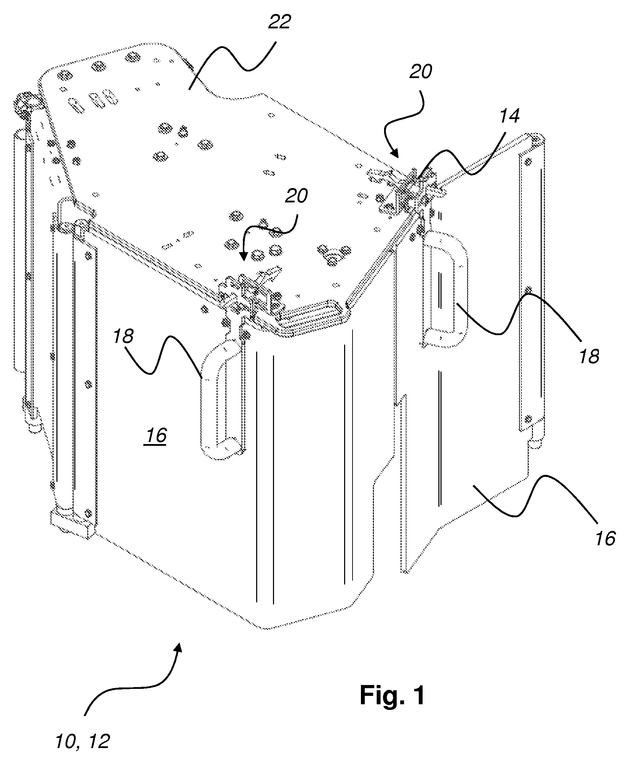

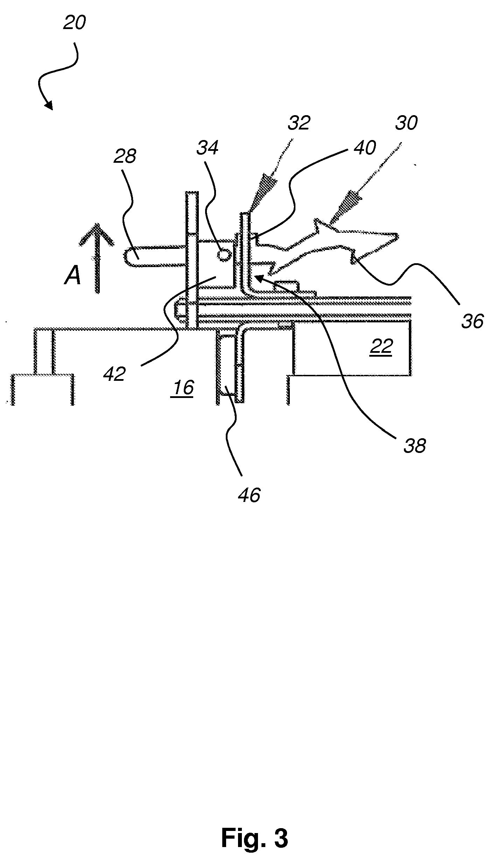

Wie anhand des nachfolgend illustrierten Ausführungsbeispiels deutlich gemacht wird, liefert die erfindungsgemäße Verriegelungs- und Sicherungsvorrichtung eine einfach und sehr zuverlässig handhabbare Mechanik, die das manuelle Eingreifen oder Eindringen von Objekten und Personen in potenziell gefährliche Maschinenareale zwar nicht verhindern kann, aber die Eingriffe in vorteilhafter Weise verzögert. So zeigt die die schematische Darstellung der Fig. 1 ein Ausführungsbeispiel eines zu schützenden Arbeitsbereichs 10 einer Maschine 12, der mit Hilfe einer erfindungsgemäßen Sicherungseinrichtung 14 gegen das Eindringen eines Objekts und/oder gegen einen Eingriff einer Person geschützt werden soll. Der Arbeitsbereich 10 der Maschine 12 ist nach außen durch schwenkbare Klappen oder Türen 16 mit außen angeordneten Handgriffen 18 sowie jeweils damit gekoppelte Verriegelungsvorrichtungen 20 gemäß vorliegender Erfindung abgetrennt. Um die notwendigen Sicherheitsanforderungen zu erfüllen, sind die schwenkbaren Klappen bzw. Türen 16 jeweils mit separaten Schalteinrichtungen (hier nicht dargestellt) gekoppelt, die beim Öffnen der Klappe oder Tür 16 einen Abschaltvorgang gefährdender beweglicher Teile und/oder Antriebe der Maschine 12 auslösen. Diese vorzugsweise elektrisch arbeitende Sicherungseinrichtung kann wahlweise mit wenigstens einer weiteren Sicherheitseinrichtung wie einer optischen Überwachungseinrichtung, einer Lichtschrankenüberwachung, einer Ultraschallüberwachungseinrichtung, einer induktiven Überwachungseinrichtung o. dgl. für den zu schützenden Arbeitsbereich 10 gekoppelt sein. Die erwähnte Schalteinrichtung kann in einer einfachen Variante der Sicherungseinrichtung bspw. ein einfacher Druckschalter oder -taster o. dgl. sein, der an geeigneter Stelle am Rahmen 22 der Maschine 12 eingebaut ist, so dass sein Druckknopf durch die Innenfläche der geschlossenen Tür 16 oder Klappe gedrückt ist, solange die Tür 16 geschlossen ist. Beim manuellen Öffnen der Tür 16 durch Ziehen am Handgriff 18 wird der hier nicht dargestellte Druckknopf gelöst, so dass der Abschaltvorgang der beweglichen Maschinenteile eingeleitet werden kann. Das schnelle Öffnen der Tür 16 während des Auslaufens der beweglichen oder sich drehenden Maschinenteile wird durch die mechanisch wirkende Verriegelungsvorrichtung 20 zuverlässig verhindert, da durch mehrstufige Handhabungsschritte beim Öffnen der Verriegelungseinrichtung 20 (vgl. Figuren 3 bis 7) eine notwendige Zeitdauer von typischerweise ca. zwei Sekunden zur Verfügung gestellt wird, um alle Gefährdungen beim Eingreifen in den geschützten Maschinenbereich auszuschließen. Durch die Konstruktion der Verriegelungsvorrichtung 20 sollte lediglich gewährleistet werden können, dass die Verriegelungseinrichtung 20 zu ihrer vollständigen Betätigung und damit zum Freigeben der Schwenkbewegung für die Tür 16 eine Mindestbetätigungszeit nicht unterschreitet.

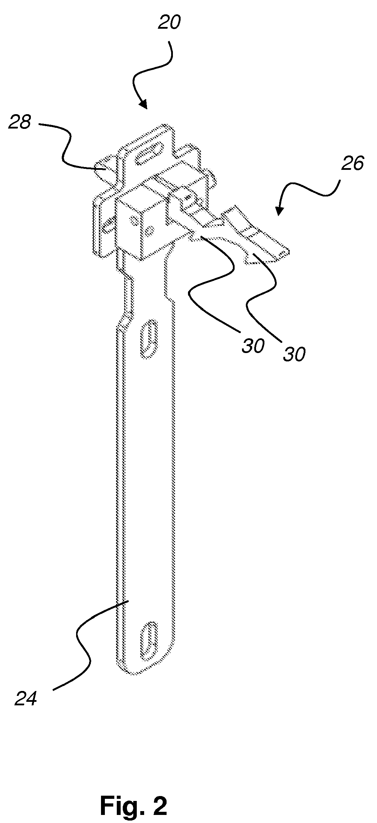

Die schematische Darstellung der Fig. 2 zeigt die konstruktiven Details einer Ausführungsvariante der erfindungsgemäßen Verriegelungsvorrichtung 20, die im Wesentlichen aus zwei voneinander trennbaren Teilen besteht. Während der Handgriff an einer an der Türaußenseite anschraubbaren oder anderweitig befestigbaren streifenartigen Blende 24 angeordnet ist, die an ihrem oberen Bereich einen beweglichen Riegel 26 trägt, der über einen Schwenkmechanismus mittels eines manuell von der Außenseite der Tür 16 betätigbaren Hebels 28 um eine horizontale Achse und innerhalb einer senkrechten Ebene verschwenkt werden kann, benötigt der Riegel 26 einen korrespondierenden Eingriff, der am Rahmen oder dem Gehäuse der Maschine 12 zu befestigen ist und ein Widerlager für den beweglichen Riegel 26 bilden kann, um die einwandfreie Funktion der Verriegelungsvorrichtung 20 gewährleisten zu können. Durch Ziehen am Handgriff 18 und gleichzeitige manuelle Betätigung des Hebels 28 kann die Tür 16 entriegelt und geöffnet werden.

Wie anhand der Darstellung der Fig. 2 verdeutlicht ist, weist der längliche bzw. pfeilartige Riegel 26 entlang seiner Längserstreckungsrichtung, die annähernd einer Bewegungsrichtung des Riegels 26 beim Öffnen oder Schließen der schwenkbaren Tür 16 entspricht, mehrere Eingriffselemente 30 zur Zusammenwirkung mit einem gehäuse- oder rahmenfesten Aufnahmeelement 32 auf, wie dies in der schematischen Seitenansicht der Fig. 3 verdeutlicht ist. Die zusammenwirkenden Eingriffs- 30 und Aufnahmeelemente 32 erzwingen zumindest beim Öffnen der Tür 16 eine mehrfache Betätigung des Hebels 28 in zwei entgegen gesetzte Bewegungs- bzw. Schwenkrichtungen, wodurch jede Öffnungsbewegung zeitlich verzögert und damit drehenden und/oder sich bewegenden Maschinenteilen ausreichend Zeit gegeben wird, zu einem zuvor durch eine andere Sicherheitseinrichtung bereits eingeleiteten oder ausgelösten Stillstand zu kommen, was sinnvoller Weise durch einen entsprechenden Kontakt, eine Überwachungseinrichtung o. dgl. ausgelöst wird, die für das Abschalten aller oder zumindest gefährdender Antriebe der Maschine sorgt. Während der Betätigungszeit für die erfindungsgemäße Verriegelungsvorrichtung 20 bis zum tatsächlichen Öffnen der Tür 16 oder Klappe können die Antriebe und sich bewegenden Teile auslaufen und zum Stillstand kommen, so dass die Verriegelungsvorrichtung 20 in vorteilhafter Weise zu einem Material schonenden, verzögerten Abschalten der Maschinenteile und -antriebe beitragen und einen schlagartigen Stillstand mit den damit verbundenen Nachteilen für die Maschinenlebensdauer verzichtbar machen kann.

Wie anhand der Figuren 2 und 3 verdeutlicht ist, sieht die gezeigte Ausführungsvariante der erfindungsgemäßen Verriegelungsvorrichtung 20 den Riegel 26 vor, der um eine zu einer Außenseite der Klappe oder Tür 16 parallele Schwenkachse 34 beweglich ist, einen innerhalb einer zur Schwenkachse 34 senkrechten Schwenkebene befindlichen Eingriffsbereich zur Zusammenwirkung mit dem Aufnahmeelement 32 aufweist und mit dem Betätigungshebel 28 zur manuellen Schwenkbetätigung fest verbunden ist. Bei der dargestellten Variante der Verriegelungsvorrichtung 20 sind die Eingriffselemente 30 durch mehrere am Eingriffsbereich des Riegels 26 angeordnete, als Widerhaken ausgebildete Zacken 36 gebildet, die bei einer Öffnungs- oder Schließbewegung der Tür 16 innerhalb der Schwenkebene des Riegels 26 entlang des Aufnahmeelements 32 gleiten und sich mit diesem in veränderlichem Verriegelungseingriff befinden. Weiterhin ist erkennbar, dass der mit der Aufnahmeöffnung 38 des Aufnahmeelements 32 zusammenwirkende Schaftabschnitt des Riegels 26 eine Ausdehnung senkrecht zu seiner Längsrichtung aufweist, die größer ist als eine Öffnungsbreite der Aufnahmeöffnung 38. Da die insgesamt drei Absätze bzw. Zacken 36 zu entgegen gesetzten Richtungen, jeweils annähernd senkrecht zur Längserstreckungsrichtung des Riegels 26, weisen, liefern sie im Zusammenhang mit der Schwenkbeweglichkeit des Riegels 26 die gewünschte labyrinthartige Führung durch das Aufnahmeelement 32.

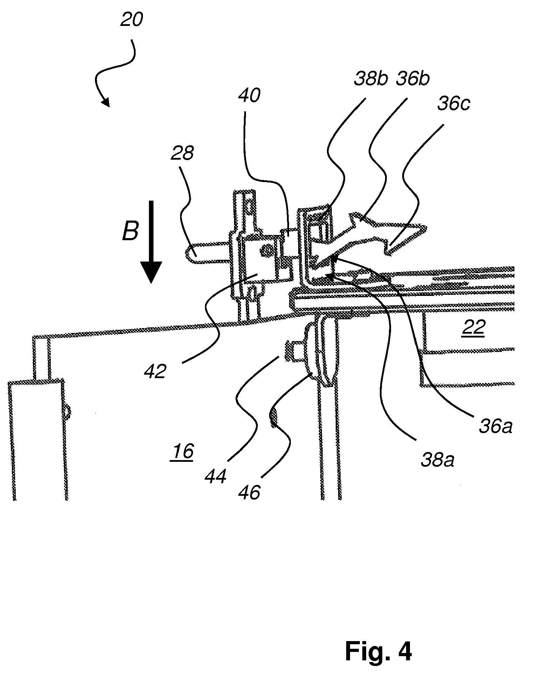

Wie anhand der schematischen Perspektivdarstellung der Fig. 4 verdeutlicht ist, stößt beim Versuch, die Tür 16 durch Ziehen am Handgriff 18 zu öffnen, der nach unten ragende und der Schwenkachse 34 am nächsten liegende erste Zacken 36a an die untere horizontale Kante 38a der Aufnahmeöffnung 38. Wahlweise kann diese Position des Riegels 26 ausschließlich durch die auf den relativ langen Riegel 26 durch die entsprechende Anordnung der Schwenkachse 34 wirkenden Hebelkräfte und die somit den Riegel 26 nach unten ziehende Schwerkraft bewirkt werden. Um jedoch die jeweiligen Schwenkbewegungen für den Benutzer praktikabler bzw. angenehmer zu machen, kann bei dieser Ausführungsvariante wahlweise eine neutrale Mittellage oder eine federunterstützte Ruhelage am unteren Anschlag des Riegels (vgl. Fig. 4) vorgesehen sein. Hierbei sind federunterstützte Rückbewegungen aus den jeweiligen Auslenkungen des Riegels 26 nach oben, d.h. beim Drücken des Hebels 28 nach unten, vorgesehen. Im gezeigten Ausführungsbeispiel befindet sich die Ruhelage am unteren Anschlag, der einem Endanschlag in eine der beiden Schwenkrichtungen entspricht. Auslenkungen in die jeweils andere Endlage müssen bei dieser Variante sinnvoller Weise gegen die Rückstellkraft einer Federeinrichtung durchgeführt werden.

Wie dies anschaulich anhand der Figuren 4 bis 7 verdeutlicht wird, weist der Riegel 26 an seiner Unterseite zwei voneinander beabstandete Absätze bzw. Zacken 36a und 36c und an der gegenüber liegenden Oberseite nur einen Absatz bzw. Zacken 36b auf, der sich in Längserstreckungsrichtung des Riegels 26 zwischen den beiden Absätzen bzw. Zacken 36a und 36c der Unterseite befindet. Auf diese Weise müssen mindestens drei aufeinander folgende Bewegungen durchgeführt werden, um die Absätze bzw. Zacken 36 durch die Anschläge 38a und 38b des Aufnahmeelements 32 manövrieren zu können. Die Eingriffselemente 30 des Riegels sind als Widerhaken mit in Öffnungsrichtung der Klappe oder Tür 16 senkrechten oder abgeschrägten Anschlagflächen oder -kanten ausgebildet, so dass für das Überwinden der Widerstände zwingend ein gegensinniges mehrfaches Verschwenken des Riegels 26 erforderlich ist. Da die Eingriffselemente 30 an ihren den Anschlagflächen abgewandten Flanken dagegen angeschrägt sind, kann eine Rückdreh- oder Schwenkbewegung des Riegels 26 beim Schließen der Klappe oder Tür 16 selbsttätig und ohne manuelle Unterstützung durch Zusammenwirkung der Eingriffs- 30 und Aufnahmeelemente 32 erfolgen. Die abgeschrägten Flanken der Anschlag- bzw. Eingriffselemente 30 gleiten hierbei beim Schließen der Tür 16 unter gleichzeitiger Verschwenkung des Riegels 26 und unter widerstandsarmer Überwindung der verschiedenen Anschlagelemente oder Absätze entlang des Aufnahmeelements 32 bzw. dessen Öffnung 38, bis die Klappe oder Tür 16 wieder geschlossen ist und der Riegel 26 in seine entspannte Ruhelage bewegt ist.

Das Öffnen der gemäß Fig. 3 geschlossenen Tür 16 kann durch Ziehen am Handgriff 18 eingeleitet werden. Wahlweise kann dabei der Hebel 28 in Richtung des Pfeils A nach oben geschoben werden, wodurch der um die horizontale Schwenkachse 34 bewegliche Riegel 26 nach unten abgesenkt und eine nach oben weisende und den Riegel 26 in horizontaler Lage haltende Anschlagkante 40 an der oberen Kante 38b der Aufnahmeöffnung 38 anliegt. Eine innerhalb eines Lagergehäuses 42 angeordnete, hier nicht dargestellte Rückstelleinrichtung bzw. Rückstellfeder sorgt dafür, dass der Hebel 28 entgegen der Betätigungsrichtung A unter Anlage der Anschlagkante 40 an der oberen Kante 38b in seiner horizontalen Lage gehalten und nach unten gedrückt ist. Da die Anschlagkante 40 jedoch parallel zur Längserstreckungsrichtung des Riegels 26 ausgerichtet ist, kann sie während des Zugs am Handgriff 18 weitgehend widerstandslos entlang der Aufnahmeöffnung 38 gleiten, bis der Riegel 26 entsprechend Fig. 4 nach unten fällt und der erste Zacken 36a an der unteren Kante 38a der Aufnahmeöffnung 38 anliegt und dort den Riegel 26 blockiert. Gleichzeitig wird durch Abheben der Tür 16 vom Rahmen 22 ein zunächst gedrückter (vgl. Fig. 3) Druckknopf 44 eines am Rahmen 22 angeordneten Schalters 46 freigegeben (vgl. Fig. 4), wodurch zweckmäßigerweise ein Maschinenstopp aktiviert wird und zumindest die durch die geöffnete Tür 16 zugänglichen rotierenden oder angetriebenen Maschinenteile angehalten werden. Die weiteren Öffnungsschritte liefern dann die notwendige Zeit bis zum endgültigen Auslaufen und bis zum Stillstand der beweglichen Teile.

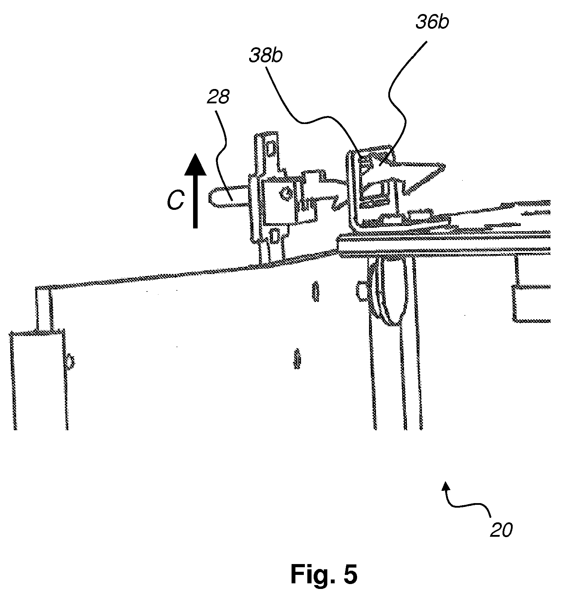

Durch Drücken des Hebels 28 in Pfeilrichtung B nach unten (vgl. Fig. 4) kann der erste Zacken 36a aus dem blockierenden Eingriff mit der unteren Kante 38a der Aufnahmeöffnung 38 gebracht werden, wodurch die Tür 16 um einen geringen Weg weiter geöffnet werden kann. Diese Öffnungsbewegung endet zunächst entsprechend Fig. 5 durch die Blockade des zweiten Zackens 36b des Riegels 26 an der oberen Kante 38b der Aufnahmeöffnung 38. Diese Blockade wird zusätzlich unterstützt durch die Rückstelleinrichtung, die den Riegel 26 durch Federkraft nach oben drückt und verhindert, dass der längere und damit schwerere Riegelabschnitt gegenüber dem kürzeren und damit leichteren Hebelabschnitt durch die Schwerkraft nach unten absinkt. Bei der nun folgenden weiteren Öffnungsbewegung der Tür 16 ist erstmals ein aktives Heben des Hebels 28 in Pfeilrichtung C nach oben (vgl. Fig. 5) erforderlich, um den zweiten Zacken 36b aus dem blockierenden Eingriff mit der oberen Kante 38b der Aufnahmeöffnung 38 zu bringen. Diese aus ergonomischer Sicht ungünstige Hebebewegung liefert andererseits den auslaufenden Maschinenteilen wertvolle Verzögerungszeit, da erwartet werden kann, dass ein Benutzer für das Anheben des Hebels 28 (Pfeil C, Fig. 5) zumindest geringfügig mehr Zeit benötigt als für das stärker vertraute Drücken nach unten (Pfeil B, Fig. 4).

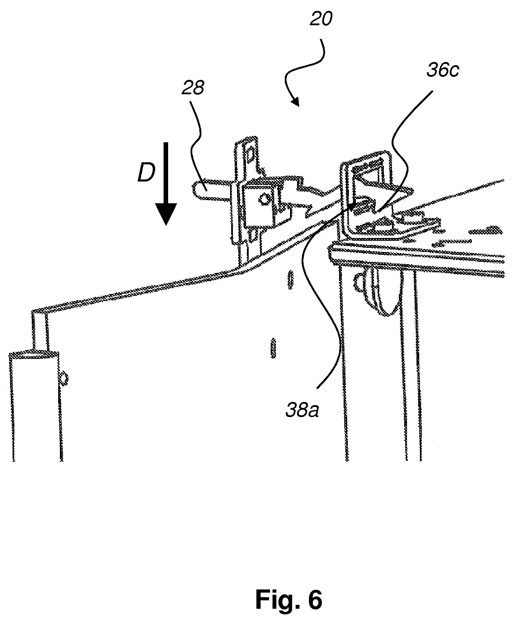

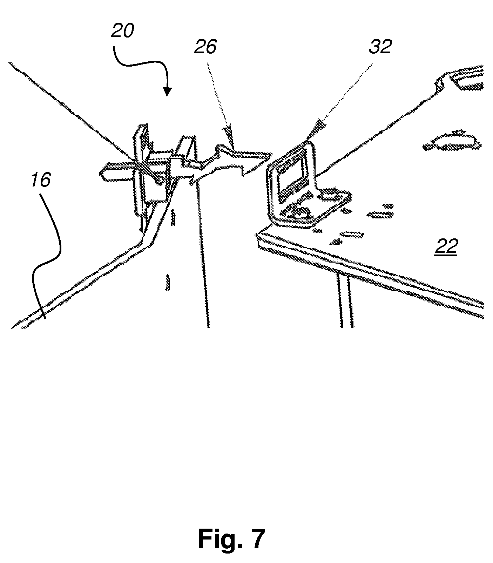

Eine dritte Blockade gegen das vollständige Öffnen der Tür 16 bewirkt wiederum der dritte Zapfen 36c gemäß Fig. 6 an der unteren Kante 38a, was durch letztmaliges Drücken des Hebels 28 in Pfeilrichtung D nach unten überwunden werden kann, so dass die Tür 16 gemäß Fig. 7 vollständig geöffnet werden kann. Der Riegel 26 mit seinen Eingriffselementen 30 ist dabei vollständig aus dem Eingriffsbereich des Aufnahmeelements 32 mit der Aufnahmeöffnung 38 gebracht. Das Schließen der Tür 16 kann hingegen weitgehend widerstandsarm durch einfaches Zudrücken erfolgen, wobei die abgeschrägten Vorderflanken für ein problemloses Auf- und Abschwenken des Riegels 26 sorgen.

Wie bereits weiter oben erwähnt, kann es weiterhin von Vorteil sein, wenn die Rückschwenkbewegungen des Riegels 26 mit einer Dämpfungseinrichtung und/oder mechanischen Bremseinrichtung (nicht dargestellt) zusammenwirken. Eine solche Dämpfungs- und/oder Bremseinrichtung kann für eine zusätzliche Verzögerung der gegensinnigen Schwenkbewegungen des Riegels 26 sorgen, so dass auch bei Betätigung durch einen besonders geschickten oder geübten Benutzer keine beliebige Beschleunigung der Öffnungsbewegung möglich ist, wodurch unter Umständen die gewünschte Verzögerungszeit bis zum Auslaufen der sich drehenden oder bewegenden Maschinenteile in unerwünschter Weise unterschritten werden könnte.

### Verwendete Bezugszeichen:

- 10: Arbeitsbereich
- 12: Maschine
- 14: Sicherungseinrichtung
- 16: Tür, Klappe
- 18: Handgriff
- 20: Verriegelungsvorrichtung
- 22: Rahmen
- 24: Blende
- 26: Riegel
- 28: Hebel
- 30: Eingriffselement
- 32: Aufnahmeelement
- 34: Schwenkachse
- 36: Zacken
- 36a: erster Zacken
- 36b: zweiter Zacken
- 36c: dritter Zacken
- 38: Aufnahmeöffnung
- 38a: untere Kante
- 38b: obere Kante
- 40: Anschlagkante
- 42: Lagergehäuse
- 44: Druckknopf
- 46: Schalter

- A, B, C, D: Hebelbetätigungsrichtungen

## Patentansprüche

1. Sicherungseinrichtung (14) für einen zumindest teilweise gegen Eindringen eines Objekts und/oder gegen einen Eingriff zu schützenden Arbeitsbereich (10) einer Maschine (12), wobei die Sicherungseinrichtung (14) wenigstens eine schwenkbare Klappe oder Tür (16) sowie eine damit gekoppelte Verriegelungsvorrichtung (20) für die in oder an einem Rahmen (22) oder einem Gehäuse schwenkbare Klappe oder Tür (16), umfassend einen an der schwenkbaren Klappe oder Tür (16) angeordneten, mittels eines manuell betätigbaren Hebels (28), Handgriffs oder Knebels beweglichen Riegel (26), der mit einem am Rahmen (22) oder Gehäuse angeordneten Aufnahmeelement (32) zusammenwirkt aufweist, wobei der Riegel (26) entlang seiner Längserstreckungsrichtung, die annähernd einer Bewegungsrichtung des Riegels (26) beim Öffnen oder Schließen der schwenkbaren Klappe oder Tür (16) entspricht, mehrere Eingriffselemente (30) zur Zusammenwirkung mit dem gehäuse- oder rahmenfesten Aufnahmeelement (32) aufweist, und wobei im Gebrauch die zusammenwirkenden Eingriffs- und Aufnahmeelemente (30, 32) zumindest beim Öffnen der Klappe oder Tür (16) eine mehrfache manuelle Betätigung des Hebels (28), Handgriffs oder Knebels in wenigstens zwei entgegen gesetzte Bewegungs-, Schwenk- (B, C, D) oder Drehrichtungen erzwingen, und wobei die schwenkbare Klappe oder Tür (16) mit einer Schalteinrichtung gekoppelt ist, die beim Öffnen der Klappe oder Tür (16) einen Abschaltvorgang gefährdender beweglicher Teile und/oder Antriebe der Maschine (12) auslöst.

2. Sicherungseinrichtung nach Anspruch 1, bei der der Riegel (26) um seine Längsachse drehbar ist, einen zylindrischen Eingriffsbereich zur Zusammenwirkung mit dem Aufnahmeelement (32) aufweist und mit einem Drehknebel zur manuellen Betätigung drehfest verbunden ist.

3. Sicherungseinrichtung nach Anspruch 2, bei der die Eingriffselemente (30) durch am Eingriffsbereich des Riegels (26) angeordnete Zapfen und/oder Nuten gebildet sind, die bei einer Öffnungs- oder Schließbewegung der Klappe oder Tür (16) in Längserstreckungsrichtung des Riegels (26) entlang des Aufnahmeelements (32) gleiten und sich mit diesem in veränderlichem Verriegelungseingriff befinden.

4. Sicherungseinrichtung nach Anspruch 1, bei der der Riegel (26) um eine zu einer Außenseite der Klappe oder Tür (16) parallele Schwenkachse (34) beweglich ist, einen innerhalb einer zur Schwenkachse (34) senkrechten Schwenkebene befindlichen Eingriffsbereich zur Zusammenwirkung mit dem Aufnahmeelement (32) aufweist und mit einem Betätigungshebel (28) zur manuellen Schwenkbetätigung fest verbunden ist.

5. Sicherungseinrichtung nach Anspruch 4, bei der die Eingriffselemente (30) durch am Eingriffsbereich des Riegels (26) angeordnete Zacken (36; 36a, 36b, 36c), Vorsprünge und/oder Nuten gebildet sind, die bei einer Öffnungs- oder Schließbewegung der Klappe oder Tür (16) innerhalb der Schwenkebene des Riegels (26) entlang des Aufnahmeelements (32) gleiten und sich mit diesem in veränderlichem Verriegelungseingriff befinden.

6. Sicherungseinrichtung nach Anspruch 4 oder 5, bei der Riegel (26) mehrere ungefähr senkrecht zur Längsrichtung und parallel zur Bewegungs- oder Schwenkebene des Riegels (26) orientierte Absätze oder Zacken (36; 36a, 36b, 36c) aufweist, und wobei der mit einer das Aufnahmeelement (32) bildenden Aufnahmeöffnung (38) zusammenwirkende Schaftabschnitt des Riegels (26) eine Ausdehnung senkrecht zu seiner Längsrichtung aufweist, die größer ist als eine Öffnungsbreite der Aufnahmeöffnung (38).

7. Sicherungseinrichtung nach Anspruch 6, bei der die wenigstens zwei Absätze oder Zacken (36; 36a, 36b, 36c) zu entgegen gesetzten Richtungen, jeweils annähernd senkrecht zur Längserstreckungsrichtung des Riegels (26) weisen.

8. Sicherungseinrichtung nach Anspruch 6, bei der an einer Seite zwei beabstandete Absätze oder Zacken (36; 36a, 36c) und an der gegenüber liegenden Seite ein Absatz oder Zacken (36; 36b) angeordnet ist, der sich in Längserstreckungsrichtung des Riegels (26) zwischen den beiden Absätzen oder Zacken (36; 36a, 36c) der anderen Seite befindet.

9. Sicherungseinrichtung nach einem der Ansprüche 1 bis 8, bei der eine Rückdreh- oder Schwenkbewegung des Riegels (26) beim Schließen der Klappe oder Tür (16) selbsttätig und ohne manuelle Unterstützung durch Zusammenwirkung der Eingriffs- und Aufnahmeelemente (30, 32) bewirkbar ist.

10. Sicherungseinrichtung nach einem der Ansprüche 1 bis 9, bei der gegen jede manuelle Betätigung des Hebels (28), Handgriffs oder Knebels aus einer neutralen Lage eine Rückstellkraft eines Rückstellmechanismus wirkt.

11. Sicherungseinrichtung nach Anspruch 9 oder 10, bei der die Rückdreh- oder Schwenkbewegung des Riegels (26) mit einer Dämpfungseinrichtung und/oder mechanischen Bremseinrichtung zusammenwirkt.

12. Sicherungseinrichtung nach einem der voranstehenden Ansprüche, die mit wenigstens einer weiteren Sicherheitseinrichtung wie einer optischen Überwachungseinrichtung, einer Lichtschrankenüberwachung, einer Ultraschallüberwachungseinrichtung, einer induktiven Überwachungseinrichtung o. dgl. für den zu schützenden Arbeitsbereich (10) gekoppelt ist.

13. Maschine (12) zur Verarbeitung und/oder Handhabung von Objekten wie Getränkebehälter, Flaschen oder anderer Artikel, mit einer Sicherungseinrichtung (14) gemäß einem der Ansprüche 1 bis 12.

## Claims

1. Safety device (14) for the at least partial protection of a workspace (10) of a machine (12) against the intrusion of an object and / or against an intervention, the safety device (14) having at least one pivotable flap or door (16) as well as a locking device (20) coupled to the flap or door (16), the flap or door (16) being arranged pivotable in or on a frame (22) or a housing, comprising a movable latch (26) arranged at the pivotable flap or door (16), the latch (26) being movable by means of a manually operable lever (28), a handle or a toggle, the latch (26) cooperating with a receiving element (32) arranged on the frame (22) or the housing, wherein the latch (26) comprises a plurality of operation elements (30) along its longitudinal extension direction for cooperating with the housing fixed or frame fixed receiving element (32), the longitudinal extension direction corresponding to the direction of movement of the latch (26) during opening or closing of the pivotable flap or door (16), and wherein, in use, the cooperating operation elements and receiving element (30, 32) force at least a multiple manual actuation of the lever (28), the handle or the toggle in at least two opposing movement directions, swivel directions (B, C, D) or rotation directions at least upon the opening of the flap or door (16), and wherein the pivotable flap or door (16) is coupled to a switching device that triggers a shutdown of hazardous moving parts and / or drives of the machine (12) upon an opening of the flap or door (16).

2. Safety device according to claim 1, wherein the latch (26) is rotatable about its longitudinal axis, wherein the latch (26) comprises a cylindrical engagement section for the cooperation with the receiving element (32) and wherein the latch (26) is rotatably connected to a rotary toggle for manual actuation.

3. Safety device according to claim 2, wherein the operation elements (30) are formed as studs and / or notches arranged at the engagement section of the latch (26), the studs and / or notches sliding along the receiving element (32) in longitudinal direction of the latch (26) upon an opening or closing movement of the flap or door (16) and wherein the operation elements (30) are in variable locking engagement with the latch (26).

4. Safety device according to claim 1, wherein the latch (26) is movable about a pivotal axis (34), the pivotal axis (34) being parallel to an outer side of the flap or door (16), wherein the latch (26) comprises an engagement section located within a pivoting plane perpendicular to the pivotal axis (34) for cooperating with the receiving element (32) and wherein the latch (26) is fixedly connected to an operating lever (28) for a manual swiveling operation.

5. Safety device according to claim 4, wherein the operation elements (30) are formed as teeth (36; 36a, 36b, 36c), projections and / or notches arranged at the engagement section of the latch (26), the teeth, projections or notches sliding along the receiving element (32) within the pivoting plane of the latch (26) during an opening or closing movement of the flap or door (16) and wherein the operation elements (30) are in variable locking engagement with the latch (26).

6. Safety device according to claim 4 or 5, wherein the latch (26) comprises a plurality of overhangs or teeth (36; 36a, 36b, 36c), the overhangs or teeth (36; 36a, 36b, 36c) being oriented approximately perpendicular to the longitudinal direction and parallel to the movement or pivoting plane of the latch (26), wherein a receiving opening (38) forms the receiving element (32), and wherein a shank portion of the latch (26) cooperating with the receiving opening (38) has an extent perpendicular to its longitudinal direction that is larger than an opening width of the receiving opening (38).

7. Safety device according to claim 6, wherein the at least two overhangs or teeth (36; 36a, 36b, 36c) point in opposite directions in each case approximately perpendicular to the longitudinal direction of the latch (26).

8. Safety device according to claim 6, wherein two spaced apart overhangs or teeth (36; 36a, 36c) are arranged on one side and wherein one overhang or tooth (36; 36b) is arranged on the other opposite side, wherein the overhang or tooth (36; 36b) is arranged in between the two overhangs or teeth (36; 36a, 36c) of the first side in longitudinal direction of the latch (26).

9. Safety device according to one of the claims 1 to 8, wherein a return rotational movement or a pivotal movement of the latch (26) is effected automatically and without manual support upon closing of the flap or door (16) by interaction of the operation elements and the receiving elements (30, 32).

10. Safety device according to one of the claims 1 to 9, wherein a restoring force of a restoring mechanism acts against each manual actuation of the lever (28), the handle or the toggle from a neutral position.

11. Safety device according to one of the claims 9 or 10, wherein the return rotational movement or the pivotal movement of the latch (26) cooperates with a dampening means and / or with a mechanical braking device.

12. Safety device according to one of the previous claims, which is coupled to at least one additional safety device for the protected workspace (10), such as an optical monitoring device, a light barrier monitoring, an ultrasonic monitoring device, an inductive monitoring means or the like.

13. Machine (12) for processing and / or handling of objects such as beverage containers, bottles or other articles, with a safety device (14) according to one of the claims 1 to 12.

## Revendications

1. Dispositif de sécurité (14) pour une zone de travail (10) d'une machine (12) à protéger au moins partiellement contre l'intrusion d'un objet et/ou contre une intervention, le dispositif de sécurité (14) présentant au moins une trappe ou une porte (16) pivotante ainsi qu'un dispositif de verrouillage (20), qui y est relié, pour la trappe ou porte (16) pivotant dans ou sur un cadre (22) ou un boîtier, comprenant un verrou (26) agencé sur la trappe ou porte pivotante (16), mobile au moyen d'un levier (28), d'une poignée ou d'une manette actionnable manuellement, et coopérant avec un élément récepteur (32) agencé sur le cadre (22) ou boîtier, le verrou (26) présentant, le long de la direction de sa dimension longitudinale, qui correspond approximativement à une direction de mouvement du verrou (26) lors de la fermeture ou de l'ouverture de la trappe ou porte pivotante (16), plusieurs éléments d'intervention (30) destinés à coopérer avec l'élément récepteur (32) fixé de manière permanente au boîtier ou cadre, et les éléments d'intervention et récepteur (30,32), coopérant l'un avec l'autre, imposant, à l'utilisation, au moins au moment de l'ouverture de la trappe ou porte (16), un actionnement manuel multiple du levier (28), de la poignée ou de la manette dans au moins deux directions de mouvement, pivotement (B, C, D) ou rotation opposées, et la trappe ou porte pivotante (16) étant raccordée à un dispositif de commutation qui déclenche, lorsqu'on ouvre la trappe ou porte (16), une opération de mise hors-circuit de pièces mobiles représentant un danger, et/ou l'entraînement de la machine (12).

2. Dispositif de sécurité selon la revendication 1, où le verrou (26) est rotatif autour de son axe longitudinal, présente une zone d'intervention de forme cylindrique destinée à coopérer avec l'élément récepteur (32), et est relié raide en torsion à une manette rotative destinée à être actionnée manuellement.

3. Dispositif de sécurité selon la revendication 2, où les éléments d'intervention (30) se composent de tenons et/ou rainures, disposés dans la zone d'intervention du verrou (26), qui glissent, au cours d'un mouvement d'ouverture ou de fermeture de la trappe ou porte (16), dans le sens de la dimension longitudinale du verrou (26) le long de l'élément récepteur (32), et se trouvent, avec celle-ci, en intervention de verrouillage variable.

4. Dispositif de sécurité selon la revendication 1, où le verrou (26) est mobile autour d'un axe de pivot (34) parallèle à un côté extérieur de la trappe ou porte (16), présente une zone d'intervention, qui se trouve à l'intérieur d'un plan d'articulation perpendiculaire à l'axe de pivot (34), destinée à coopérer avec l'élément récepteur (32), et est relié solidairement à un levier de commande (28) pour actionner manuellement le pivotement.

5. Dispositif de sécurité selon la revendication 4, où les éléments d'intervention (30) se composent de dentelures (36; 36a, 36b, 36c), saillies et/ou rainures, agencées dans la zone d'intervention du verrou (26), qui glissent, au cours d'un mouvement d'ouverture ou de fermeture de la trappe ou porte (16), à l'intérieur du plan d'articulation du verrou (26) le long de l'élément récepteur (32), et se trouvent avec celle-ci en intervention de verrouillage variable.

6. Dispositif de sécurité selon la revendication 4 ou 5, où le verrou (26) présente plusieurs décrochements ou dentelures (36; 36a, 36b, 36c) approximativement perpendiculaires au sens longitudinal et parallèles au plan de mouvement et d'articulation du verrou (26), et où la section tige du verrou (26), qui coopère avec un orifice de réception (38) constituant l'élément récepteur (32), présente un allongement perpendiculaire à sa direction longitudinale qui est supérieur à une largeur d'ouverture de l'orifice de réception (38).

7. Dispositif de sécurité selon la revendication 6, où lesdits au moins deux décrochements ou dentelures (36; 36a, 36b, 36c) sont dirigés dans des directions opposées, chacun approximativement à la perpendiculaire de la direction de la dimension longitudinale du verrou (26).

8. Dispositif de sécurité selon la revendication 6, où sont agencés deux décrochements ou dentelures (36; 36a, 36c), espacés l'un de l'autre, sur un côté, et un décrochement ou une dentelure (36; 36b) sur l'autre côté, ledit décrochement ou ladite dentelure (36; 36b) se trouvant, dans le sens de la dimension longitudinale du verrou (26), entre les deux décrochements ou dentelures (36; 36a, 36c) situés de l'autre côté.

9. Dispositif de sécurité selon l'une quelconque des revendications 1 à 8, où un mouvement de rotation inverse ou de pivotement du verrou (26) peut être activé, lors de la fermeture de la trappe ou porte (16), de lui-même et sans aide manuelle, par coopération des éléments d'intervention et récepteur (30, 32).

10. Dispositif de sécurité selon l'une quelconque des revendications 1 à 9, où une force de rappel issue d'un mécanisme de rappel s'oppose à chaque actionnement manuel du levier (28), de la poignée ou manette exercé à partir d'une position neutre.

11. Dispositif de sécurité selon la revendication 9 ou 10, où le mouvement de rotation inverse ou de pivotement du verrou (26) coopère avec un dispositif d'amortissement et/ou dispositif de freinage mécanique.

12. Dispositif de sécurité selon l'une quelconque des revendications précédentes, qui est raccordé, pour la zone de travail à protéger (10), à au moins un autre dispositif de sécurité tel qu'un dispositif de surveillance optique, une surveillance de barrières lumineuses, un dispositif de surveillance par ultrasons, un dispositif de surveillance inductif ou équivalent.

13. Machine (12) pour le traitement et/ou la manipulation d'objets tels que récipients à boisson, bouteilles ou autres articles, pourvue d'un dispositif de sécurité (14) selon une des revendications 1 à 12.
